## Europäisches Patentamt

## European Patent Office

## Office européen des brevets

(19)

(11) Veröffentlichungsnummer: **0 163 159**
**B1**

## EUROPÄISCHE PATENTSCHRIFT

(12)

(45) Veröffentlichungstag der Patentschrift:
04.02.87

(51) Int. Cl.⁴: **C 02 F 3/12**

(21) Anmeldenummer: **85105369.4**

(22) Anmeldetag: **02.05.85**

(54) **Verfahren zur biologischen Reinigung von Abwasser.**

(30) Priorität: **11.05.84 DE 3417550**

(43) Veröffentlichungstag der Anmeldung:
**04.12.85 Patentblatt 85/49**

(45) Bekanntmachung des Hinweises auf die Patenterteilung:
**04.02.87 Patentblatt 87/6**

(84) Benannte Vertragsstaaten:
**AT BE CH DE FR GB IT LI NL**

(56) Entgegenhaltungen:
**EP-A-0 112 095**
**GB-A-1 141**

(73) Patentinhaber: **Linde Aktiengesellschaft, Abraham-Lincoln- Strasse 21, D-6200 Wiesbaden (DE)**

(72) Erfinder: **Feldkirchner, Heinz, Dr. Dipl.- Phys., Riedeselstrasse 33, D-8130 Starnberg (DE)**
Erfinder: **Riquarts, Hans- Peter, Dr. Dr.- Ing., Wolfratshauser Strasse 88a, D-8023 Pullach (DE)**

(74) Vertreter: **Schaefer, Gerhard, Dr., Linde Aktiengesellschaft Zentrale Patentabteilung, D-8023 Höllriegelskreuth (DE)**

## Beschreibung

Die Erfindung betrifft ein Verfahren zur biologischen Reinigung von Abwasser, bei dem das Abwasser in einem volldurchmischten Becken in Gegenwart von Trägerteilchen für organische Abwasserinhaltsstoffe abbauende Mikroorganismen mit einem Sauerstoff enthaltenden Gas begast wird und bei dem mit Hilfe der Gaszufuhr eine Zirkulationsströmung des Abwassers um eine vom Einlaufbereich zum Auslaufbereich des Beckens verlaufende Horizontalachse erzeugt wird.

Bekanntlich kann bei Verwendung von frei schwebenden Trägerteilchen als Ansiedlungsfläche für Mikroorganismen die Biomassenkonzentration auch in Belebtschlammanlagen wesentlich erhöht und auf diese Weise ein schneller Abbau von im Abwasser vorhandenen Schmutzstoffen erreicht werden. Dabei werden neuerdings insbesondere offenzellige Schaumstoffteilchen als Trägerteilchen eingesetzt, deren spezifisches Gewicht, deren Größe und deren Makroporen so aufeinander abgestimmt werden, daß zur Intensivierung des Stoffaustauschs ein Auf- und Absteigen der Schaumstoffteilchen im Belebungsbecken aufgrund der vorherrschenden Strömung und Begasung ohne weiteres möglich ist.

Nachteilig beim Betrieb eines Belebungsbeckens unter Einsatz solcher Trägerteilchen ist jedoch, daß mit der zum Auslauf des Belebungsbeckens gerichteten Strömung des Abwasser-Belebtschlamm-Gemisches allmählich ein Verfrachten der Trägerteilchen zum Auslaufbereich hin stattfindet. Dadurch ergibt sich dann am Auslauf, der zum Zurückhalten der Trägerteilchen in der Regel mit einem Sieb oder Lochblech oder ähnlichen Einrichtungen versehen ist, eine Konzentrierung der Trägerteilchen, so daß im Lauf der Zeit die Trägerteilchen nicht nur ein Zusetzen des Auslaufs bewirken sondern auch im Einlaufbereich des Belebungsbeckens, in dem gerade eine hohe Biomassenkonzentration erwünscht ist, nicht mehr in ausreichender Zahl vorhanden sind.

Der Erfindung liegt die Aufgabe zugrunde, ein Verfahren der eingangs genannten Art so auszugestalten, daß auf einfache und wirtschaftliche Weise eine Konzentrierung der frei im Abwasser-Belebtschlamm-Gemisch schwebenden Trägerteilchen im Auslaufbereich des Beckens und ein Zusetzen des Auslaufs vermieden werden kann.

Diese Aufgabe wird erfindungsgemäß dadurch gelöst, daß die die Zirkulationsbewegung aufrechterhaltende Gaszufuhr zumindest im Bereich des letzten Drittels des Strömungsweges zumindest bei einer Trägerteilchenkonzentration in diesem Bereich, die über der im Anfangsbereich vorhandenen Trägerteilchenkonzentration liegt, gegenüber der im Anfangsbereich des Strömungsweges eingestellten Gaszufuhr zumindest reduziert wird.

Der Erfindung liegt die überraschende Erkenntnis zugrunde, daß im Abwasser schwebende Trägerteilchen bei zwei benachbarten Zirkulationsströmungsabschnitten, die mit unterschiedlichen Gasmengen angetrieben werden, auf der gemeinsamen horizontalen Zirkulationsachse von dem mit niedrigeren zu dem mit höheren Gasmengen angetriebenen Abschnitt transportiert werden. Daraus ergibt es sich, daß bei einer spiralförmigen Walzenströmung, wie sie das Abwasser beispielsweise in einem Längsbecken durchläuft, der Trägermaterialtransport entgegen der zum Auslaufbereich gerichteten Abwasserströmung erfolgt, wenn die Gaszufuhr längs des Abwasserströmungsweges entsprechend reduziert wird.

Die Reduktion der Gaszufuhr kann dabei so durchgeführt werden, daß bei einer Trägerteilchenkonzentration im letzten Drittel des Strömungsweges, die über der Trägerteilchenkonzentration im Anfangsbereich des Strömungsweges liegt, die Gaszufuhr im letzten Drittel zeitweise so lange vollständig abgestellt wird, bis die Trägerteilchenkonzentration durch Rücktransport der Trägerteilchen unter die im Anfangsbereich vorhandene Trägerteilchenkonzentration abgesunken ist. Anschließend kann die Gaszufuhr wieder eingeschaltet werden. Steigt dann dadurch die Trägerteilchenkonzentration im letzten Drittel des Strömungsweges über die Trägerteilchenkonzentration des Einlaufbereiches, muß der Vorgang wiederholt werden.

Statt einer solchen intermittierenden Gaszufuhr im letzten Drittel besteht aber auch die Möglichkeit, daß die Gaszufuhr im letzten Drittel gegenüber der Gaszufuhr im Anfangsbereich des Strömungsweges nur reduziert wird. Die Reduktion der Gaszufuhr kann dabei als dauernde Maßnahme oder aber ebenso als intermittierende Maßnahme durchgeführt werden. Als Entscheidungskriterien, welche der verschiedenen Möglichkeiten für die Gaszufuhr im letzten Drittel gewählt wird, ist jeweils die vorhandene Trägerteilchenkonzentration und der in diesem Bereich erforderliche Sauerstoffbedarf des Abwassers heranzuziehen, wobei bei einer Häufung der Trägerteilchen am Auslauf unter Umständen kurzfristig eine Minderung des Sauerstoffgehaltes unter den erforderlichen Wert in Kauf genommen werden muß, um mit Sicherheit einen Rücktransport der Trägerteilchen zum Einlaufbereich entgegen der zum Auslaufbereich gerichteten Abwasserströmung zu erhalten.

Mit der erfindungsgemäßen Verfahrensweise kann eine weitgehende Gleichverteilung der Trägerteilchen über den Strömungsweg des Abwassers im Becken erreicht werden, ohne daß zusätzliche mechanische oder pneumatische Rückfördereinrichtungen für die Trägerteilchen erforderlich sind, so daß damit kein zusätzlicher Energieaufwand anfällt.

Eine vorteilhafte Ausgestaltung des erfindungsgemäßen Verfahrens besteht darin, daß die Reduktion der Gaszufuhr im Bereich des letzten Drittels des Strömungsweges auf 20 bis 70 %, vorzugsweise auf 25 bis 50%, der im Anfangsbereich des Strömungsweges eingestellten Gaszufuhr vorgenommen wird.

Weiterhin vorteilhaft ist es auch, die Reduktion der Gaszufuhr bereits im Bereich des zweiten Drittels des Strömungsweges auf 50 bis 90 %, vorzugsweise auf 70 bis 90 % der im Anfangsbereich des Strömungsweges eingestellten Gaszufuhr vorzunehmen. Dabei können diese Gaszufuhrwerte, wie eingangs beschrieben, ebenso in Abhängigkeit der Trägerteilchenkonzentration intermittierend eingestellt werden.

Ist die Zuflußmenge des Abwassers und damit die Strömungsgeschwindigkeit des Abwassers durch das Becken weitgehend konstant, ist es außerdem vorteilhaft, die Reduktion der Gaszufuhr stufenweise durchzuführen. So kann beispielsweise im zweiten Drittel des Strömungsweges die Gaszufuhr im Anfangsbereich des zweiten Drittels auf 90 %, im mittleren Bereich auf 80 %, im Endbereich auf 70 % und im mittleren Bereich des letzten Drittels des Strömungsweges auf 60 % und im Endbereich des letzten Drittels auf 50 % der am Einlaufbereich des Beckens erfolgten Gaszufuhr eingestellt werden. Falls dennoch eine Häufung von Trägerteilchen im Auslaufbereich auftritt, kann die Abstufung der Gaszufuhr beispielsweise im letzten Drittel noch stärker durchgeführt werden.

Ist aufgrund des für die Abbauvorgänge erforderlichen Sauerstoffeintrags in das Abwasser eine Reduktion des Gaseintrags auf die Länge des Strömungsweges des Abwassers gesehen nicht in dem für die Gleichverteilung der Trägerteilchen erforderlichen Maß möglich, empfiehlt es sich, gemäß einer weiteren vorteilhaften Ausgestaltung der Erfindung, im letzten Drittel des Beckens mit Abstand vom Beckenauslauf im Bodenbereich des Beckens weitgehend auf der ganzen Breite des Strömungsweges des Abwassers eine Begasung quer zum Strömungsweg durchzuführen. Der Abstand vom Beckenauslauf ist dabei so zu wählen, daß sich aufgrund der Gaszufuhr vor dem Beckenauslauf eine walzenartige Strömung um eine Querachse zur Auslaufströmung ergibt. Mit dieser walzenartigen Strömung können dann die Trägerteilchen vom Beckenauslauf fern gehalten werden.

Zur sicheren Vermeidung eines Abströmens von Trägerteilchen aus dem Becken ist es zweckmäßig, vor dem Beckenlauf eine Rückhalteeinrichtung für Trägerteilchen, die als Sieb, Gitter oder Lochblech ausgebildet sein kann, anzuordnen. Vorteilhafterweise wird dabei die Begasung quer zum Strömungsweg vor einer solchen Rückhalteeinrichtung zum Zurückhalten der Trägerteilchen vor dem Beckenauslauf durchgeführt und das Zurückhalten der Trägerteilchen in einem Bereich vor dem Beckenauslauf vorgenommen, in dem die Strömungsgeschwindigkeit in Richtung auf den Beckenauslauf höchstens 0,1 m/sec. beträgt. Bei einem solchen Abstand der Rückhalteeinrichtung vor dem Beckenauslauf ist sichergestellt, daß die in Richtung auf den Beckenauslauf gerichtete Strömung nur eine geringe Kraft auf die Trägerteilchen ausübt. Zweckmäßigerweise ist deshalb auch die Rückhalteeinrichtung über die gesamte Fläche quer zum Beckenauslauf ausgebildet.

Die Begasung quer zum Strömungsweg wird mit Vorteil in einem Abstand vor der Rückhalteeinrichtung durchgeführt, der dem 1 bis 1,5-fachen der Füllhöhe des Beckens entspricht. Bei einer solchen Anordnung der Begasung quer zum Strömungsweg wird erreicht, daß unmittelbar vor der dem Beckenauslauf zugeordneten Rückhalteeinrichtung der Trägerteilchen die Walzenströmung nach unten gerichtet ist. Dadurch bilden sich vordem Beckenauslauf bzw. der Rückhalteeinrichtung senkrecht nach unten wirkende Strudel, die die sich vor der Rückhalteeinrichtung sammelnden Trägerteilchen von dieser abscheren und nach unten transportieren. Anschließend werden die Trägerteilchen durch den Sog der Walzenstromung von der Rückhalteeinrichtung wegtransportiert.

Eine verbesserte Scherwirkung wird dagegen erreicht, wenn gemäß einer weiteren Ausgestaltung des Erfindungsgedankens die Begasung quer zum Strömungsweg in einem Abstand von höchstens 1 m vor der Rückhalteeinrichtung durchgeführt wird. Mit einer solchen Begasung wird eine walzenartige Strömung um eine Querachse zur Auslaufströmung erzeugt, die unmittelbar vor der Rückhalteeinrichtung eine nach oben gerichtete Strömung aufweist. Da dabei die Begasung direkt vor der Rückhalteeinrichtung durchgeführt wird, können die dort aufsteigenden Gasblasen eventuell an der Rückhalteeinrichtung anhaftende Trägerteilchen abscheren. Gegebenenfalls kann auf diese Weise sogar auch eine Reinigung der Rückhalteeinrichtung von anhängenden Abwasserinhaltsstoffen erzielt werden. Gute Ergebnisse hinsichtlich des Freihaltens der Rückhalteeinrichtung werden dabei erreicht, wenn die Begasung quer zum Strömungsweg als feinblasige Begasung beispielsweise mit Hilfe von Belüftungskerzen durchgeführt wird.

Bei der Gaszufuhr über die Begasung quer zur Strömungsrichtung ist darauf zu achten, daß die Gaszufuhr nicht so hoch eingestellt wird, daß diese auf die im vorderen Bereich des Beckens vorhandene Trägerteilchen eine Sogwirkung ausübt. Aus diesem Grund ist die Gaszufuhr über die Begasung quer zum Strömungsweg vorzugsweise unter der im vorletzten oder im letzten Drittel des Strömungsweges eingestellten Gaszufuhr für die Zirkulationsströmung zu halten.

**Patentansprüche**

1. Verfahren zur biologischen Reinigung von Abwasser, bei dem das Abwasser in einem volldurchmischten Becken in Gegenwart von Trägerteilchen für organische Abwasserinhaltsstoffe abbauende Mikroorganismen mit einem Sauerstoff enthaltenden Gas begast wird und bei dem mit Hilfe der Gaszufuhr eine Zirkulationsströmung des Abwassers um eine vom Einlaufbereich zum Auslaufbereich des Beckens verlaufende Horizontalachse erzeugt wird, dadurch gekennzeichnet, daß die die Zirkulationsbewegung aufrechterhaltende Gaszufuhr zumindest im Bereich des letzten Drittels des Strömungsweges zumindest bei einer Trägerteilchenkonzentration in diesem Bereich, die über der im Anfangsbereich vorhandenen Trägerteilchenkonzentration liegt, gegenüber der im Anfangsbereich des Strömungsweges eingestellten Gaszufuhr zumindest reduziert wird.

2. Verfahren nach Anspruch 1, dadurch gekennzeichnet, daß die Reduktion der Gaszufuhr im Bereich des letzten Drittels des Strömungsweges auf 20 bis 70 % der im Anfangsbereich des Strömungsweges eingestellten Gaszufuhr vorgenommen wird.

3. Verfahren nach Anspruch 2, dadurch gekennzeichnet, daß die Reduktion der Gaszufuhr im Bereich des letzten Drittels des Strömungsweges auf 25 bis 50 % der im Anfangsbereich des Strömungsweges eingestellten Gaszufuhr vorgenommen wird.

4. Verfahren nach einem der Ansprüche 1 bis 3, dadurch gekennzeichnet, daß die Reduktion der Gaszufuhr im Bereich des zweiten Drittels des Strömungsweges auf 50 bis 90 % der im Anfangsbereich des Strömungsweges eingestellten Gaszufuhr vorgenommen wird.

5. Verfahren nach einem der Ansprüche 1 bis 4, dadurch gekennzeichnet, daß die Reduktion der Gaszufuhr stufenweise durchgeführt wird.

6. Verfahren nach einem der Ansprüche 1 bis 5, dadurch gekennzeichnet, daß im letzten Drittel des Beckens mit Abstand vom Beckenauslauf im Bodenbereich des Beckens weitgehend auf der ganzen Breite des Strömungsweges des Abwassers eine Begasung quer zum Strömungsweg durchgeführt wird.

7. Verfahren nach Anspruch 6, dadurch gekennzeichnet, daß die Begasung quer zum Strömungsweg vor einer Rückhalteeinrichtung zum Rückhalten der Trägerteilchen vor dem Beckenauslauf durchgeführt wird und daß das Zurückhalten der Trägerteilchen in einem Bereich vor dem Beckenauslauf vorgenommen wird, in dem die Strömungsgeschwindigkeit in Richtung auf den Beckenauslauf höchstens 0,1 m/sec. beträgt.

8. Verfahren nach Anspruch 7, dadurch gekennzeichnet, daß die Begasung quer zum Strömungsweg in einem Abstand vor der Rückhalteeinrichtung durchgeführt wird, der dem 1 bis 1,5-fachen der Füllhöhe des Beckens entspricht.

9. Verfahren nach Anspruch 7, dadurch gekennzeichnet, daß die Begasung quer zum Strömungsweg in einem Abstand von höchstens 1 m vor der Rückhalteeinrichtung durchgeführt wird.

**Claims**

1. A process for the biological purification of waste water wherein the waste water is acted on by an oxygen-containing gas in a thoroughly mixed vessel in the presence of carrier particles for micro-organisms which decompose organic waste water components and wherein with the aid of the gas supply a circulatory flow of the waste water is produced about a horizontal axis which extends from the inlet region to the outlet region of the vessel, characterised in that the gas supply maintaining the circulatory movement is at least reduced relative to the gas supply which is set in the initial region of the flow path, at least in the region of the last third of the flow path at least with a concentration of carrier particles in this region which is above the concentration of carrier particles in the initial region.

2. A process as claimed in Claim 1, characterised in that the reduction of the gas supply in the region of the last third of the flow path is 20 to 70% of the gas supply which is set in the initial region of the flow path.

3. A process as claimed in Claim 2, characterised in that the reduction of the gas supply in the region of the last third of the flow path is 25 to 50% of the gas supply which is set in the initial region of the current path.

4. A process as claimed in one of Claims 1 to 3, characterised in that the reduction of the gas supply in the region of the second third of the current path is effected to 50 to 90% of the gas supply which is set in the initial region of the current path.

5. A process as claimed in one of Claims 1 to 4, characterised in that the reduction of the gas supply is carried out stepwise.

6. A process as claimed in one of Claims 1 to 5, characterised in that in the last third of the vessel at a distance from the vessel outlet in the bottom region of the vessel, a gassing is effected extending over the entire width of the flow path of the waste water transversely to the flow path.

7. A process as claimed in Claim 6, characterised in that the gassing is carried out transversely to the flow path upstream of a retaining device for retaining the carrier particles before the vessel outlet; and that the retention of the carrier particles is effected in a region preceding the vessel outlet, in which the flow rate in the direction of the vessel outlet is at most 0.1 m/sec.

8. A process as claimed in Claim 7, characterised in that the gassing is carried out transversely to the flow path at a distance upstream of the retaining device which corresponds to 1 to 1.5 times the filling level of the vessel.

9. A process as claimed in Claim 7, <u>characterised in</u> that the gassing is carried out transversely to the flow path at a distance of at most 1 m upstream of the retaining device.


**Revendications**

1.- Procédé d'épuration biologique d'eaux usées, dans lequel les eaux usées sont gazéifiées au moyen d'un gaz contenant de l'oxygène dans un bac à brassage intégral en présence de particules de support de micro-organismes détruisant des substances organiques contenues dans les eaux usées, et dans lequel, au moyen du débit de gaz, on produit un courant de circulation des eaux usées autour d'un axe horizontal s'étendant d'une zone d'entrée à une zone de sortie du bac, caractérisé en ce que le débit de gaz entretenant le mouvement de circulation est réduit au moins dans la zone du troisième tiers du trajet d'écoulement et au moins pour une concentration en particules porteuses dans cette zone qui est supérieur à la concentration en particules porteuses existante dans une zone initiale, par rapport au débit de gaz établi dans la zone initiale du trajet d'écoulement.

2.- Procédé selon la revendication 1, caractérisé en ce que la réduction du débit de gaz dans la zone du dernier tiers du trajet d'écoulement est comprise entre 20 et 70% du débit de gaz établi dans la zone initiale du trajet d'écoulement.

3.- Procédé selon la revendication 2, caractérisé en ce que la réduction du débit de gaz dans la zone du dernier tiers du trajet d'écoulement est comprise entre 25 et 50% du débit de gaz établi dans la zone initiale du trajet d'écoulement.

4.- Procédé selon une des revendications 1 à 3, caractérisé en ce que la réduction du débit de gaz dans la zone du second tiers du trajet d'écoulement est comprise entre 50 et 90% du débit de gaz établie dans une zone initiale du trajet d'écoulement.

5.- Procédé selon une des revendications 1 à 4, caractérisé en ce que la réduction du débit de gaz est effectuée par paliers.

6.- Procédé selon une des revendications 1 à 5, caractérisé en ce que, dans le dernier tiers du bac, on effectue une gazéification transversalement au trajet d'écoulement, à une certaine distance de la sortie du bac et dans une zone de fond du bac, pratiquement sur toute la largeur du trajet d'écoulement des eaux usées.

7.- Procédé selon la revendication 6, caractérisé en ce qu'on effectue la gazéification transversalement au trajet d'écoulement en amont d'un dispositif de retenue servant à retenir les particules porteuses avant la sortie du bac et en ce qu'on effectue la retenue des particules porteuses dans une zone située en amont de la sortie du bac et dans laquelle la vitesse d'écoulement en direction de la sortie du bac s'élève au maximum à 0,1 m/s.

8.- Procédé selon la revendication 7, caractérisé en ce que la gazéification est effectuée transversalement à la direction d'écoulement à une distance d'espacement en amont du dispositif de retenue qui est comprise entre 1 et 1,5 fois la hauteur de remplissage du bac.

9.- Procédé selon la revendication 7, caractérisé en ce que la gazéification est effectuée transversalement au trajet d'écoulement à une distance d'espacement qui est au maximum de 1 m en amont du dispositif de retenue.